# EUROPEAN PATENT APPLICATION

(11) **EP 1 507 427 A1**
(43) Date of publication of application: **16.02.2005**
(21) Application number: 03292008.4
(22) Date of filing: 11.08.2003
(51) Int. Cl.: H04Q 7/36

(54) **Beam selection in a wireless cellular telecommunication system**

(71) Applicant: ALCATEL, 75008 Paris (FR)
(72) Inventor: Braun, Volker, 70178 Stuttgart (DE); Zeller, Dietrich, 71067 Sindelfingen (DE); Hoek, Cornelis, 71732 Tamm (DE)
(74) Representative: Rausch, Gabriele, Dr.

(57) **Abstract**

The present invention relates to a communication method in a wireless cellular telecommunication system comprising at least one base station having a beam forming capability, the method comprising the steps of:
- receiving at least a first pilot signal being assigned to a first beam and a second pilot signal being assigned to a second beam by a user equipment,
- measuring the signal strengths of the at least first and second pilot signals,
- selecting one of the at least first and second beams having the strongest pilot signal,
- signalling of the beam selection to the base station,
- switching off data channels to the user equipment of the beams which have not been selected by the user equipment.

## Description

### Background and prior art

Conventional mobile cellular systems usually apply sectorised base stations. Each sector is covered by a single antenna beam in both uplink and downlink directions.

In 3GPP systems beam forming using multiple downlink beams per sector is considered (cf. 3GPP TR 25.887 V1.0.0 (2001/12) the entirety of which is herein incorporated by reference). In particular it is suggested in this technical report that the same or different scrambling codes can be used for the beams. In such a 3GPP a node B can have beam forming capabilities such as "flexible beam" or "grid of fixed beams".

Beam forming has also been considered for CDMA base stations in "An adaptive antenna method for improving downlink performance of CDMA base stations", *Spread Spectrum Techniques and Applications, 1998. Proceedings., 1998 IEEE 5th International Symposium on* Ylitalo, J.; Katz, M. Pages 599 -603 vol.2 and US Patent No. 6,438,389B1. A common feature of these prior art downlink beam forming methods is that the downlink beam selection is performed by the network, either by the base station or by another network node such as a radio network controller.

The present invention is aimed to provide an improved communication method for downlink beam selection as well as a corresponding computer program product, user equipment and base station.

### Summary of the invention

The present invention provides for a communication method in a wireless cellular telecommunication system comprising at least one base station having a beam forming capability. In a 3GPP system such a base station is typically referred to as node B.

Each one of the beams which is sent out by the base station has an assigned pilot signal. The various pilot signals are received by user equipment within the coverage of the base station. The user equipment measures the signal strengths of the received pilot signals. The selection of one of the beams is based on the measured signal strength, e.g. the user equipment selects the beam having the strongest pilot signal. This beam selection is signalled from the user equipment to the base station. In response the base station switches off the data channels to the user equipment of beams which have not been selected and transmits the data channels for the user equipment on the selected beam.

The switching off of the data channels of beams which have not been selected by the user equipment has the advantage that better usage can be made of the available bandwidth resources. In particular, the overall transmission power for forming the communication link between the base station and the user equipment can be reduced. Further the communication quality is improved as interferences are eliminated due to the switching off of the data channels.

Another advantage is that the selection of the beam by the user equipment is more accurate in comparison to the selection by the network.

In accordance with a preferred embodiment of the invention the signalling of the beam selection from the user equipment to the base station is performed by physical layer signalling. This has the advantage that the latency time between beam selection and switching off of the data channels of the beams which have not been selected can be minimised.

In accordance with a further preferred embodiment of the invention not only the data channels of the beams which have not been selected are switched off but also the control channels. However the pilot signals of the beams are not switched off such that the initial beam selection can be changed at any time. When the beam selection changes, the corresponding data and control channels of the selected beam are switched on whereas the data and control channels of the deselected beam are switched off.

In accordance with a preferred embodiment of the invention the data channel is a dedicated physical data channel (DPDCH), a physical downlink shared channel (PDSCH), or a high speed physical downlink shared channel (HS-PDSCH).

In accordance with a further preferred embodiment of the invention the control channel is a dedicated physical control channel (DPCCH), or a High Speed Shared Control Channel (HS-SCCH).

The present invention requires that the UE has certain capabilities as regards the beam selection. In case legacy UEs are used in the telecommunication system the Node-B uses an alternative transmission scheme for the legacy UEs. In a 3GPP system, Node B could in this case use e.g. 1Tx transmission, 2Tx closed loop diversity, 2Tx space-time transmit diversity, open loop (user specific or fixed) beamforming (cf. 3GPP TR 25.887), or transmission with a sector antenna pattern, and balancing of the power transmitted with different Node B antennas can be done by balancing the assignment of Tx antennas to different UEs.

In accordance with a preferred embodiment of the invention a radio network controller informs the Node-B which transmission scheme to use for which one of the UEs and also which antennas are to be used. In a scenario where a mixture of legacy UEs and UEs supporting beam selection is used a radio network controller informs the node-B to use a method of the invention for the UEs which support the beam selection and to use an alternative transmission scheme for the legacy UEs.

### Brief description of the drawings

In the following preferred embodiments of the invention will be described in greater detail by making reference to the drawings in which:
- Figure 1: is illustrative of a flow chart of a preferred embodiment of the invention,
- Figure 2: is illustrative of a base station having multiple beams,
- Figure 3: is a block diagram of a base station and a user equipment.

### Detailed description

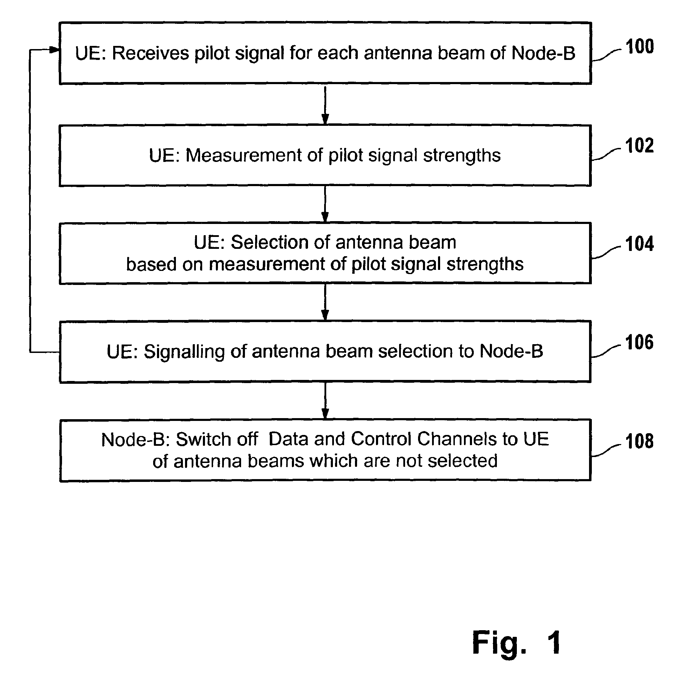

Figure 1 shows a flow chart for performing downlink antenna beam selection. In step 100 a user equipment within the coverage of a node-B receives multiple pilot signals. Each one of the pilot signals is assigned to one of the antenna beams of the node-B.

In step 102 the user equipment measures the signal strength of the pilot signals. Based on the measured pilot signal strength the user equipment performs a selection of the antenna beam in step 104. In other words, the user equipment selects the antenna beam for which it receives the strongest pilot signal.

In step 106 the user equipment signals its antenna beam selection to the node-B. Preferably this is done by physical layer signalling. In response the node-B switches off data and control channels of beams which have not been selected (step 108). Further the control of the user equipment goes back from step 106 to step 100 in order to permanently re-evaluate the antenna beam selection.

This has the advantage that better usage can be made of the network capacity as the overall transmission power for the communication link between the user equipment and node-B is reduced. Further signalling of the beam selection is fast and the beam determination by the user equipment is accurate.

This compares to the prior art 3GPP solution where the beam determination is based on uplink measurements. In comparison to the present invention this prior art solution has the disadvantage that radio propagation conditions may be different for up and downlink and also due to technical reasons the beam may point in uplink and downlink not in exactly the same direction. In this case the best receiving beam does not necessarily indicate the best beam for transmission. In the following the direction from UE to node-B is referred to as uplink and the direction from node-B to UE as downlink.

The second problem of the prior art is based on the fact that the signalling mechanisms to control node-B and user equipment by a radio network controller (RNC) introduces a delay between the selection of the beam by RNC and the actual usage of the beams by the user equipment and the node-B in the order of one to several seconds. During this latency time the user equipment may have moved already to another position where another beam selection would perform better.

All these disadvantages of the prior art 3GPP beam selection mechanism are overcome by the above described method of figure 1.

Preferably a RNC which is coupled to the node-B informs the node-B and the user equipment which ones of the antenna beams of the node-B are candidates for transmission and assigns identifiers to these beams. The identifiers of the beams are transmitted from a RNC to the node-B and the user equipment as signalling information. Preferably the user equipment returns one of the identifiers to the node-B in step 106 for signalling of the beam selection. Preferably fast layer 1 signalling is used for this purpose. For example the uplink dedicated physical control channel (DPCCH) can be used for this purpose by the user equipment.

Preferably the pilot signals are received as common pilot channel (CPICH) signals. However, the method of figure 1 is not restricted to using common pilot channels. The measurements can also be based on user specific pilot information. For example, in UMTS, user specific pilot information is embedded in the DPCCHs. In general also separate user specific pilot channels can be used. For the transmission of the user specific pilot information various transmission schemes can be used, such as code or time division multiplex schemes. Pilot information to enable measurements by the user equipment must be transmitted for every candidate beam

Further secondary common pilot channels (S-CPICHs) can be used to provide the pilot signals for the candidate beams. Further, primary common pilot channels (P-CPICHs) can also be used. Such primary common pilot channels would be particularly useful to support narrow sectorisation, such as six or more sectors of the coverage of the node-B.

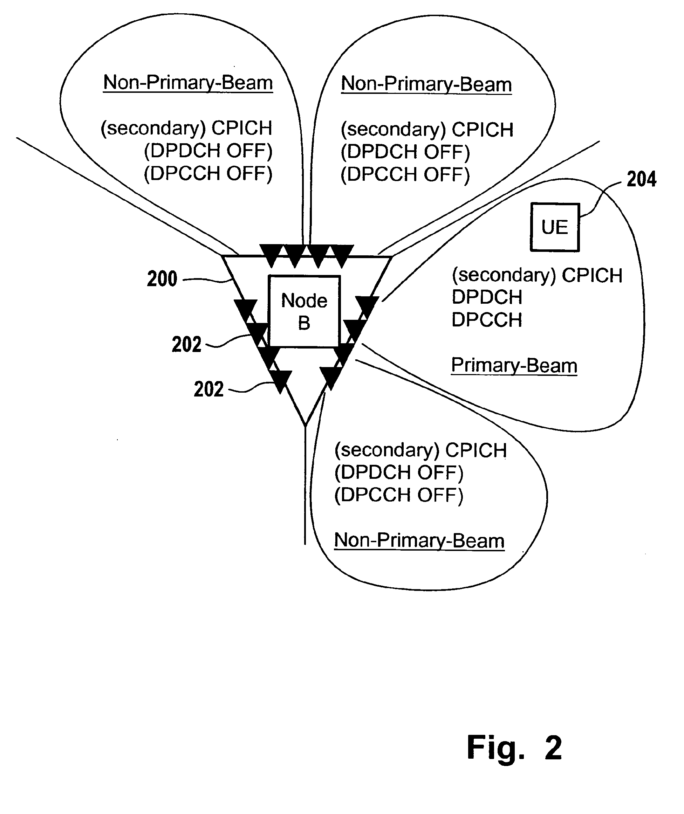

Figure 2 shows node-B 200 which has antennas 202 with beam forming capability. The coverage of the node-B 200 is divided in 3 sectors in the example considered here. In each sector, node-B 200 uses a number of fixed beams for downlink transmission. In the example considered here a number of two fixed beams is used for each sector.

A number of four transmission antennas 202 are used in the example for each sector. In every beam, node-B 200 radiates a common pilot channel (CPICH). Using the terminology of 3GPP R99 this can be a secondary CPICH.

User equipment 204 measures the received power from the candidate CPICH signals. The candidates have been previously identified by signalling received from a RNC (not shown in the drawing).

Based on these CPICH measurements, user equipment 204 decides which beam should be used by node-B 200 for transmission to the user equipment 204. In the following the beam which is selected by the user equipment 204 is referred to as "primary beam", whereas all other candidate beams which have not been selected are referred to as "non-primary".

After receipt of a layer 1 signalling message from the user equipment 204 indicating the primary beam, node-B 200 uses the identified primary beam for transmission of data and control information to user equipment 204. For example, the DPDCH, PDSCH, or HS-PDSCH can be used for data transmission whereas control information can be transmitted by means of DPCCH.

In the non-primary beams node-B 200 switches off the data transmission, i.e. DPDCH off.

In addition it is also possible to switch off the control channels of the non-primary beams, i.e. DPCCH off, in order to further minimise the overall transmission power and further reduce interferences. The control channels of the non-primary beams are not required by the user equipment 204. It is to be noted that in figure 2 only downlink transmission from node-B 200 to user equipment 204 is illustrated. In the uplink, node-B 200 is free to use beam patterns different from those used for the downlink in order to receive and/or process the signals transmitted by user equipment 204, e.g. fixed beam forming, user-specific beam forming, or any other signal combining technique.

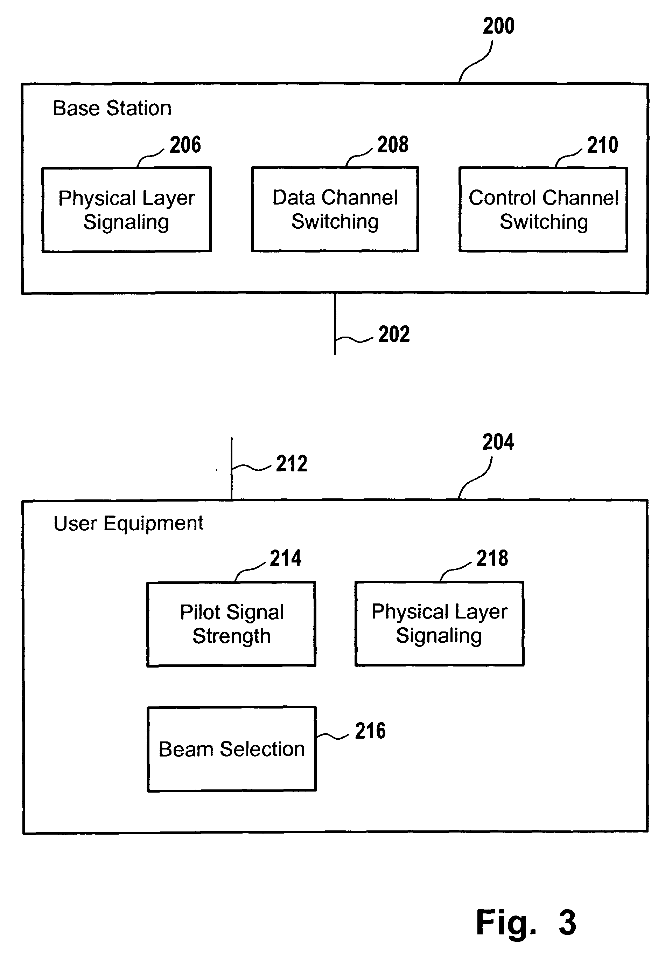

Figure 3 shows a more detailed block diagram of node-B 200 and user equipment 204.

Node-B 200 has physical layer signalling module 206, data channel switching module 208 and control channel switching module 210.

User equipment 204 has antenna 212, signal strength measurement module 214, beam selection module 216 and physical layer signalling module 218.

When user equipment 204 is within the coverage of base station 200 it receives signalling information from a RNC (not shown in figure 3) with identifiers of the beams of base station 200. Base station 200 receives these identifiers directly from RNC.

User equipment 204 measures the signal strength of the pilot signals which are emitted from base station 200 for each one of the beams by means of signal strength measurement module 214. By means of beam selection module 216 the strongest pilot signal and its associated beam identifier are selected.

The beam identifier which is indicative of the beam selection by user equipment 204 is signalled by layer 1 signalling from user equipment 204 to base station 200 by means of physical layer signalling module 218. This signalling information is received by physical layer signalling module 206 of base station 200. In response base station 200 switches off the data and control channels of the non-primary beams which have not been selected by user equipment 204 by means of data channel switching module 208 and control channel switching module 210.

### List of Reference Numerals

- 200: node-b
- 202: antenna
- 204: user equipment
- 206: physical layer signalling module
- 208: data channel switching module
- 210: control channel switching module
- 212: antenna
- 214: signal strength measurement module
- 216: beam selection module
- 218: physical layer signalling module

## Claims

1. A communication method in a wireless cellular telecommunication system comprising at least one base station having a beam forming capability, the method comprising the steps of:
- receiving at least a first pilot signal being assigned to a first beam and a second pilot signal being assigned to a second beam by a user equipment,
- measuring the signal strengths of the at least first and second pilot signals,
- selecting one of the at least first and second beams based on the measurement of the pilot signal strengths,
- signalling of the beam selection to the base station,
- switching off data channels to the user equipment of the beams which have not been selected by the user equipment,
- using the selected beam for transmission of data channels to the user equipment.

2. The method of claim 1, whereby the signalling is performed by physical layer signalling.

3. The method of claim 1, the data channel being a DPDCH, PDSCH, HS-PDSCH or a physical channel carrying a forward access channel.

4. The method of claim 1, whereby control channels, such as DPCCH or HS-SCCH, to the user equipment of the beams which have not been selected by the user equipment are switched off.

5. A computer program product for selecting one of at least first and second beams of a base station in a wireless cellular telecommunication system, the computer program product having program means for performing the steps of:
- determining the signal strengths of at least first and second pilot signals which have been received by a user equipment, the pilot signals being assigned to respective beams of the base station,
- selecting one of the at least first and second beams having the strongest pilot signal,
- signalling of the beam selection to the base station.

6. A user equipment for a wireless cellular telecommunication system comprising:
- means (212) for receiving at least first and second pilot signals of respective first and second beams of a base station (200) of the wireless cellular telecommunication system,
- means (214) for measuring the signal strength of the at least first and second pilot signals,
- means (216) for selecting one of the at least first and second beams having the strongest pilot signal,
- means (218) for signalling of the selection to the base station.

7. The user equipment of claim 6, the means for signalling of the beam selection being adapted to perform the signalling by means of physical layer signalling.

8. A base station for a wireless cellular telecommunication system having beam forming capability, the base station comprising:
- a means (206) for receiving a beam selection signal from a user equipment,
- means (208) for switching off data channels to the user equipment of beams which have not been selected.

9. The base station of claim 8, whereby the means for receiving the selection signal are adapted to receive the selection signal by physical layer signalling.

10. The base station of claim 8, further comprising means (210) for switching off control channels to the user equipment of the beams which have not been selected.
